# EUROPEAN PATENT APPLICATION

(11) **EP 0 827 332 A2**
(43) Date of publication of application: **04.03.1998**
(21) Application number: 97306742.4
(22) Date of filing: 02.09.1997
(51) Int. Cl.: H04N 1/393

(54) **Apparatus and method for modifying enlarged ratio or reduced ratio of image**

(30) Priority: 02.09.1996 KR 3791696
(71) Applicant: Samsung Electronics Co., Ltd., Suwon City, Kyungki-do (KR)
(72) Inventor: Kwon, Oh-Joon, Dongdaemun-gu, Seoul (KR)
(74) Representative: Tunstall, Christopher Stephen

(57) **Abstract**

A method of reducing an image is described. The image is reduced as image data is received. Firstly, a line select parameter is initialised and a start line designating. Line image data corresponding to the designated line is received. The line select parameter is compared with a predetermined vertical ratio and if the line select parameter is greater than the predetermined vertical ratio a pixel reduction and printing operation is performed. Next, the line select parameter is updated, and the next line designated. The pixel reduction and printing operation is performed in a similar manner to the line reduction operation described, and if the pixel select parameter is greater than a predetermined horizontal ratio, the designated pixel is printed.

## Description

### Background of the Invention

The present invention relates to an apparatus and method for enlarging or reducing an image in an image processing system.

In image processing systems such as digital copiers and facsimiles, it may be necessary to reduce or enlarge an image. In a facsimile for example, if there is a difference in resolution between the input device (a scanner) and the output device (a printer) or there is a difference in the sizes of the input sheet and output sheets, the image is appropriately reduced. One method of reducing the image is that reduction ratios are determined, a periodic pattern corresponding to the reduction ratio of a binarized image is decided and then processed pixels and discarded pixels are determined on that basis. In another method, the position of the processed pixels from the binarized image are calculated using the reduced ratio, and then the discarded pixels and the processed pixels are determined.

The image reducing method using a binarized image results in a reduced image having a smaller quantity of processed data than that using an image prior to binarization, that is, an intermediate tone image, but rather distorts the image. The distortion of the image is because regular patterns generated by the binarization processing technique, such as dithering or error diffusion, is simply discarded when the image is reduced. If 50% of the image is reduced in the horizontal and vertical directions using an average technique, four adjacent pixels contained in at least two lines are needed to form one pixel of a reduced image. In other words, the pixel formed takes on the average value of the sum of the four pixels, and the reduced image is situated at a position corresponding to the four pixels. Therefore, it is difficult to process the image in real time.

### Summary of the Invention

It is therefore an object of the present invention to provide an image reducing apparatus and method for reducing or enlarging an image more quickly and conveniently.

Accordingly, in relation to vertical image reduction, the present invention provides a method of reducing an image as image data corresponding to the image is received, comprising:
a. initialising a line select parameter and designating a start line;
b. receiving the line image data corresponding to the designated line;
c. comparing the line select parameter with a predetermined vertical ratio;
d. if the line select parameter is greater than the predetermined vertical ratio, supplying pixels from the designated line to a printer;
e. up-dating the line select parameter, designating the next line and returning to step b.

In relation to horizontal image reduction, the present invention provides a method of reducing an image as image data corresponding to the image is received, comprising:
a. receiving line image data corresponding to a designated line;
b. initialising a pixel select parameter and designating a start pixel;
c. comparing the pixel select parameter with a predetermined horizontal ratio;
d. if the pixel select parameter is greater than the predetermined horizontal ratio, supplying the designated pixel to a printer;
e. up-dating the pixel select parameter, designating the next pixel and returning to step c.

Naturally, in relation to bot vertical and horizontal reduction, the method of the present invention comprises:
a. initialising a line select parameter and designating a start line;
b. receiving the line image data corresponding to the designated line;
c. comparing the line select parameter with a predetermined vertical ratio;
d. if the line select parameter is greater than the predetermined vertical ratio:
   d1. initialising a pixel select parameter and designating a start pixel;
   d2. comparing the pixel select parameter with a predetermined horizontal ratio;
   d3. if the pixel select parameter is greater than the predetermined horizontal ratio, supplying the designated pixel to a printer;
   d4. up-dating the pixel select parameter, designating the next pixel and returning to step d2;
e. up-dating the line select parameter, designating the next line and returning to step b.

The line select parameter and/or pixel select parameter may be initialised to a vertical reduction ratio and/or a horizontal reduction ratio respectively.

Preferably, the line image data is received from a document scanner. Preferably, the image data is intermediate tone data.

In relation to horizontal and/or vertical enlargement, the present invention provides a method of enlarging an image by a non-integer enlargement ratio as image data corresponding to the image is received, comprising:
enlarging the image data by an integer modified enlargement ratio which is the product of the non-integer enlargement ratio and an integer conversion multiplier;
reducing the enlarged image by a ratio equal to the integer conversion multiplier using a image reduction method according to the invention.

Preferably, the image is enlarged by the integer modified enlargement ratio by repeating the received image data pixel-by-pixel and/or line-by-line.

The present invention also provides an image reducing apparatus comprising:
a scanner for scanning a document image and generating image data pixel-by-pixel; and
an image processor for receiving the image data, determining whether or not each pixel of the image data should be supplied to a printer and discarding the pixel data or transmitting the pixel data to the printer according to that determination.

The image reducing apparatus may further comprise a controller for generating position information of each pixel in the image data, the image processor making its determinations from the position information from the controller.

The image processor preferably makes its determinations using an image reduction method according to the invention.

### Brief Description of the Drawings

The present invention will now be described by way of example with reference to the accompanying drawings in which:
Fig. 1 shows a facsimile to which the present invention may be applied;
Fig. 2 is a flow chart illustrating an image reducing process;
Fig. 3A illustrates an image to be reduced;
Fig. 3B illustrates the reduced image of Fig. 3A; and
Fig. 4 is a flow chart illustrating an image enlarging process.

### Detailed Description of the Preferred Embodiment

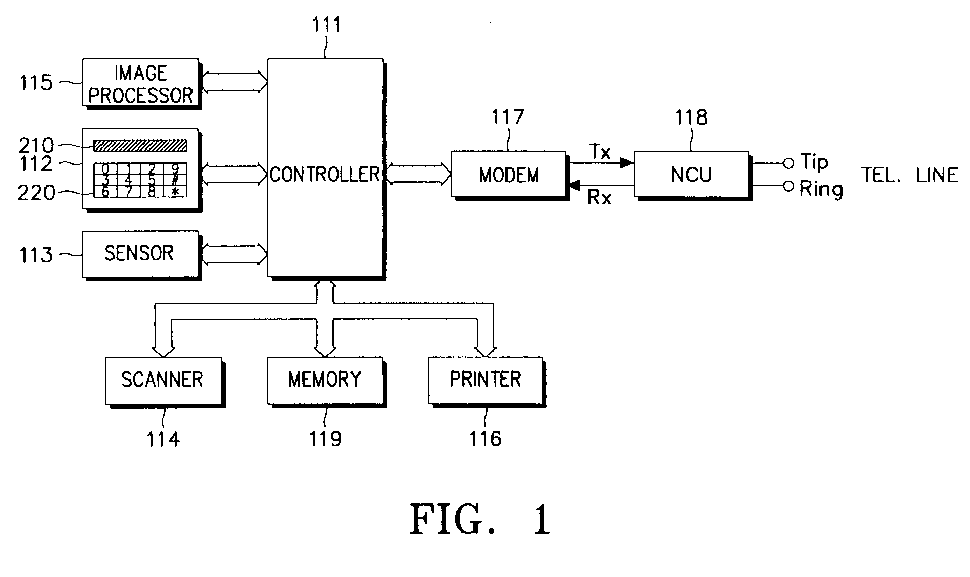

Fig. 1 illustrates the construction of a facsimile. A controller 111 controls the overall operation of the transmitting, receiving and copy modes of the facsimile according to a set program. The controller 111 may have a program memory and a data memory or may be connected to an external memory as indicated by reference numeral 119. A program is stored in the program memory, and in the data memory, data generated during the execution of the program is temporarily stored.

An operating panel 112 includes a key input pad 220 and a display unit 210. The key input pad 220 of the operating panel 112 generates data of keys pressed by the user to designate each mode and execute the designated mode. The data generated from the key input pad 220 is supplied to the controller 111. The display unit 210 of the operating panel 112 displays operating states of the system when the controller 111 implements each mode.

A sensor 113 senses whether a document is received and whether there is a printing sheet. The sensed state signal is supplied to the controller 111. A scanner 114 supplies data which is read from the document and photoelectric-converted by a charge coupled device (not shown) to the controller 111. An image processor 115 codes and decodes image data generated from the scanner 114 and a modem 117. That is, the image processor 115 causes a receiving side to receive nearly the same image as the original by dividing the image data received from the scanner 114 into background data and text data or generating intermediate tone image data.

A printer 116 prints the image data received from the image processor 115 during the receiving mode and the copy mode on a printing sheet under the control of the controller 111. The modem 117 controlled by the controller 111 modulates data generated from the controller 111 to an analog signal and demodulates signals received through a transmission line to digital data. Namely, during the transmitting mode, the modem 117 modulates the image data generated from the image processor 115 to a signal corresponding to a transmitting form of facsimile standardization specification. During the receiving mode, the modem 117 demodulates a coded image signal received through the transmission line to an original form. A network control unit (NCU) 118 controlled by the controller 111 forms a transmitting/receiving path between the telephone line and the modem 117.

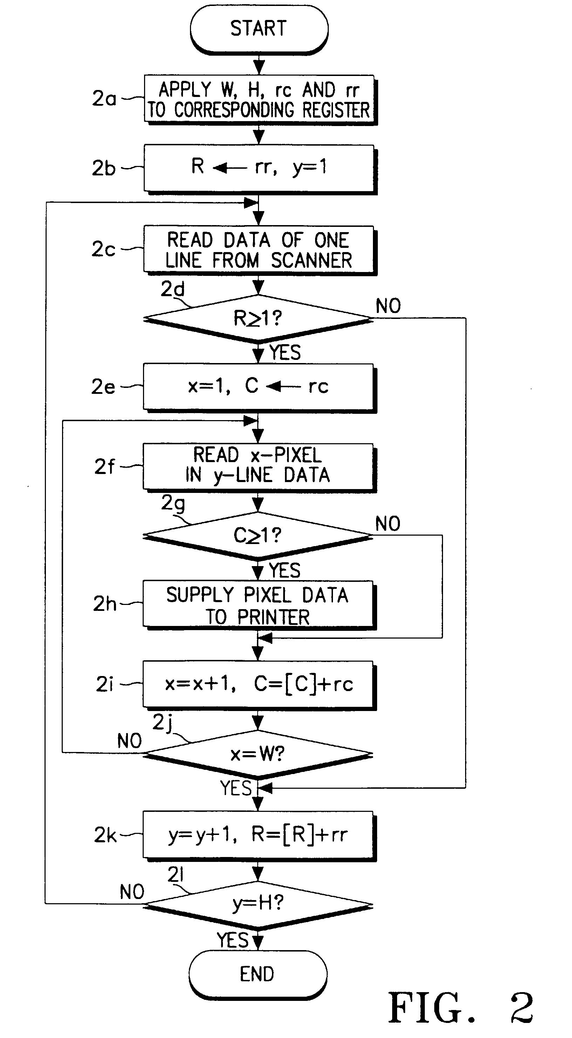

Fig. 2 is a flow chart illustrating an image reducing process. At step 2a, the image processor 115 applies parameters W, H, rc and rr to a corresponding register. The parameter W designates the number of pixels in the horizontal direction of an image to be reduced; H designates the number of pixels in the vertical direction of the image; and rc and rr indicate reduction ratios of the horizontal and vertical directions, respectively. At step 2b, the image processor 115 sets a line select parameter R to rr and sets a parameter y for sequentially designating corresponding lines to 1.

At step 2c, the image processor 115 reads the image data of one line from the scanner 114. At step 2d, the image processor 115 checks whether the line select parameter R is equal to or greater than 1 (where "1" means a standard ratio of an original image). If the parameter R is above "1", a parameter x is set to "1", x being for sequentially designating pixels in the line and a pixel select parameter C is set to the parameter rc, at step 2e. At steps 2f-2j, overall processing for reducing the pixels constituting the line is implemented. If all the pixels constituting one line are processed, the parameter y is incremented by 1 to process the next line and the line select parameter R is set to a value obtained by adding the Gaussian function for R to the parameter rr, at step 2k. At step 21, whether the parameter y is equal to the parameter H is determined. If the parameter y is equal to H, since this means that the processing of all the lines has been completed, the task is ended.

If the line select parameter R is less than 1 at step 2d, step 2d proceeds to step 2k to discard the line data read through step 2c. Thus, if the operation of discarding data of one line is executed under constant conditions, the image of the vertical direction is reduced.

The operation of steps 2f to 2j for processing each pixel constituting one line will now be described. If an effective line is designated, the image processor 115 reads the first pixel among pixels constituting that line at step 2f. At step 2g, the image processor 115 checks whether the pixel select parameter C is equal to or greater than 1 (where "1" means a standard ratio of the original image). If so, the image processor 115 supplies pixel data to the printer 116 at step 2h. The parameter x is incremented by 1 and the pixel select parameter C is set to a value obtained by adding the Gaussian function for the pixel select parameter C to the parameter rc, at step 2i. At step 2j, whether the parameter x is equal to W is checked. If the parameter x is equal to the parameter W, since this means that the processing for all the pixels of a corresponding line has been completed, the parameter y is incremented by 1 and the line select parameter R is set to a value obtained by adding the Gaussian function for R to the parameter rr as described above. If the parameter x is not equal to W, step 2j returns to step 2f to process the next pixel.

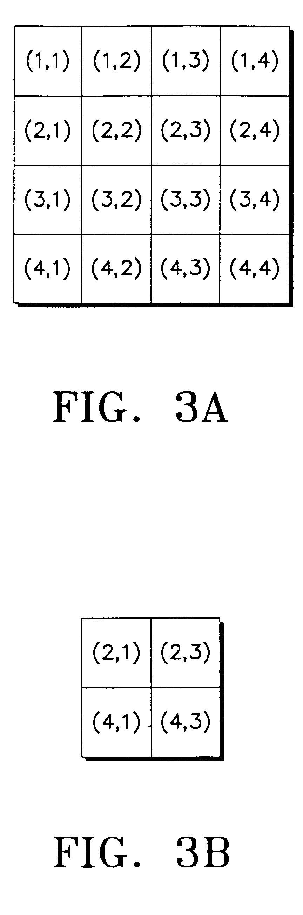

Fig. 3A illustrates an image to be reduced, and Fig. 3B shows the reduced image of Fig. 3A. For convenience, it is assumed that the size of the image is 4X4. Each pixel is indicated by (x, y). If the image of Fig. 3A is reduced through the process of Fig. 2, processed lines, discarded lines, processed pixels and discarded pixels are distinguished. For example, if the image of Fig. 3A is reduced to 50%, the first line (y=1) is processed and the second line (y=2) is discarded. In the first line, a pixel (1, 1) is discarded and a pixel (2, 1) is processed to reduce the image in the vertical and horizontal directions.

In Fig. 3B, pixels constituting the reduced image are shown, that is, pixels to be transmitted to the printer 116.

If the 2-dimensional reduction of pixels and lines is achieved by a reduction ratio which can be set in units of 1% and a register for storing a reciprocal of the reduced ratio has 9-bit size, the 7 least significant bits store the decimal places of the reduced ratio. If the number of bits corresponding to the decimal places is 7, the reduced ratio can be achieved to the nearest 1/128. A register for storing the reciprocal of the reduced ratio of the horizontal direction and a register for storing the reciprocal of the reduced ratio of the vertical direction are needed. A horizontal position register and a vertical position register are also needed to calculate and store the position of the pixel, to allow processed pixels and discarded pixels to be determined. 9-Bit registers may be used.

The calculation is such that the position register is added to the register for storing the reciprocal of the reduced ratio to calculate the position of a processed pixel. Since the 2 registers are both of 9 bits, a 9-bit adder is used. If the calculation of the vertical and horizontal directions is processed by one adder and a multiplexer is used for pre-processing, the use of unnecessary hardware logic can be prevented.

Signals indicating the start and end points of pixel processing and signals indicating the start and end points of line processing are needed. To achieve a reduction ratio which can be set in units of less than 1%, only the number of bits of the register and adder need be increased.

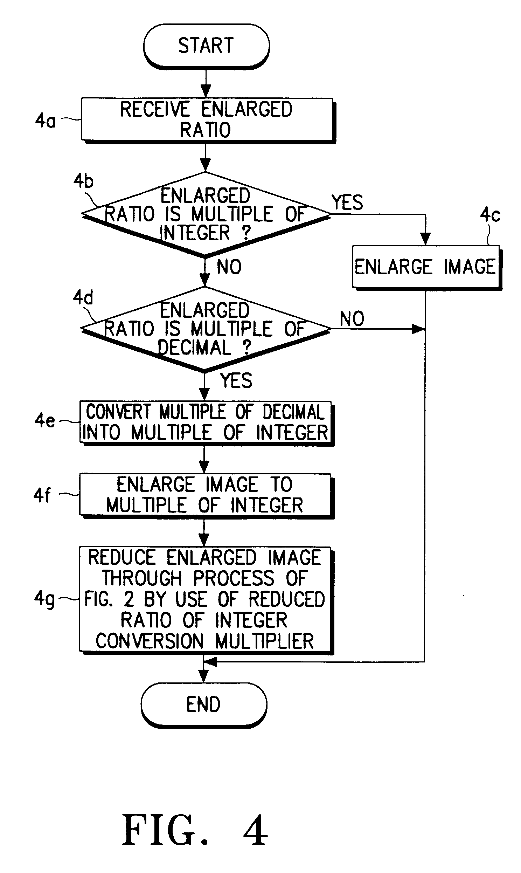

Fig. 4 illustrates an image enlarging process. If an enlargement ratio is a multiple of an integer, steps 4a to 4c are executed. If the enlargement not an integer at step 4d, the enlargement ratio is converted into an integer modified enlargement ratio by multiplication by a prescribed integer (an integer conversion multiplier), at step 4e. At step 4f, the image is enlarged by the modified enlargement ratio. At step 4g, the enlarged image is reduced through the image reducing process of Fig. 2 by use of the reduction ratio of the integer conversion multiplier. Then a desired enlarged image can be obtained.

For example, if it is desired to enlarge an image by 1.5 times, the integer conversion multiplier is 2. Therefore, the image is enlarged by 3 times and the enlarged image is reduced by a factor of 2 through the image reducing process of Fig. 2. Then a desired image enlarged by 1.5 times can be obtained. To enlarge the image at steps 4c and 4f, the same pixel is repeatedly transmitted. For instance, to enlarge the image 3 times, the same pixel is repeatedly supplied to the printer 3 times.

As noted above, hardware manufacturing cost can be reduced and there is no time delay caused by the reduction of the image since each pixel is processed and at the same time a check for processing or discarding the output value is made. That is, it is possible to process the image in real time and the hardware is small in size. If the present invention is applied to a facsimile requiring reduction between 50% and 100%, a better image in picture quality is obtained than a reduced result using the binarized image and image distortion or the bleeding phenomenon of black pixels can be prevented.

## Claims

1. A method of reducing an image as image data corresponding to the image is received, comprising:
a. initialising a line select parameter and designating a start line;
b. receiving the line image data corresponding to the designated line;
c. comparing the line select parameter with a predetermined vertical ratio;
d. if the line select parameter is greater than the predetermined vertical ratio, supplying pixels from the designated line to a printer;
e. up-dating the line select parameter, designating the next line and returning to step b.

2. A method of reducing an image as image data corresponding to the image is received, comprising:
a. receiving line image data corresponding to a designated line;
b. initialising a pixel select parameter and designating a start pixel;
c. comparing the pixel select parameter with a predetermined horizontal ratio;
d. if the pixel select parameter is greater than the predetermined horizontal ratio, supplying the designated pixel to a printer;
e. up-dating the pixel select parameter, designating the next pixel and returning to step c.

3. A method of reducing an image as image data corresponding to the image is received, comprising:
a. initialising a line select parameter and designating a start line;
b. receiving the line image data corresponding to the designated line;
c. comparing the line select parameter with a predetermined vertical ratio;
d. if the line select parameter is greater than the predetermined vertical ratio:
d1. initialising a pixel select parameter and designating a start pixel;
d2. comparing the pixel select parameter with a predetermined horizontal ratio;
d3. if the pixel select parameter is greater than the predetermined horizontal ratio, supplying the designated pixel to a printer;
d4. up-dating the pixel select parameter, designating the next pixel and returning to step d2;
e. up-dating the line select parameter, designating the next line and returning to step b.

4. A method of reducing an image according to any one of claims 1-3 in which the line select parameter and/or pixel select parameter are initialised to a vertical reduction ratio and/or a horizontal reduction ratio respectively.

5. A method of reducing an image according to any one of claims 1-4 in which the line image data is received from a document scanner.

6. A method of enlarging an image by a non-integer enlargement ratio as image data corresponding to the image is received, comprising:
enlarging the image data by an integer modified enlargement ratio which is the product of the non-integer enlargement ratio and an integer conversion multiplier;
reducing the enlarged image by a ratio equal to the integer conversion multiplier using a method according to any one of claims 1-5.

7. A method of enlarging an image according to claim 6 in which the image is enlarged by the integer modified enlargement ratio by repeating the received image data pixel-by-pixel and/or line-by-line.

8. An image reducing apparatus comprising:
a scanner for scanning a document image and generating image data pixel-by-pixel; and
an image processor for receiving the image data, determining whether or not each pixel of the image data should be supplied to a printer and discarding the pixel data or transmitting the pixel data to the printer according to that determination.

9. An image reducing apparatus according to claim 8, further comprising a controller for generating position information of each pixel in the image data and in which the image processor makes its determinations from the position information from the controller.

10. An image reducing apparatus according to claim 8 or claim 9 in which the image processor makes its determinations using a method according to any one of claims 1-5.

11. A method of reducing or enlarging an image as described herein with reference to and as illustrated in the accompanying drawings.

12. An image reducing apparatus as described herein with reference to and as illustrated in the accompanying drawings.
